# EUROPEAN PATENT SPECIFICATION

(11) **EP 1 101 989 B1**
(45) Date of publication and mention of the grant of the patent: **11.02.2004**
(21) Application number: 00204010.3
(22) Date of filing: 14.11.2000
(51) Int. Cl.: F16L 3/24, F16B 9/02

(54) **Rail attachment system with locking member**
Schienenbefestigungssystem mit Verriegelungselement
Dispositif de fixation pour rail avec verrouillage

(30) Priority: 15.11.1999 NL 1013574
(43) Date of publication of application: 23.05.2001
(73) Proprietor: FLAMCO B.V., NL-2802 AC Gouda (NL)
(72) Inventor: van Groos, Lambert George, 1054 NG Amsterdam (NL); Beijersbergen van Henegauwen, Cornelis Martin, 5314 AP Bruchem (NL)
(74) Representative: Riemens, Roelof Harm

(56) References cited:
- DE-A- 2 010 321
- DE-A- 3 625 885
- GB-A- 2 296 060

## Description

The invention relates to a rail attachment system according to the preamble of claim 1.

A system of this nature is known, for example, from DE-A-36 25 885, which discloses a rail attachment system which is intended for hanging pipes from a ceiling and which comprises a mounting rail with a lockable coupling element inside it. The coupling element is designed in the shape of a hammer head and comprises a mounting head and a retaining body, in which a bush provided with an internal screwthread is secured. The mounting head can slide to and fro inside the mounting rail, the underside of the head being pressed against the guide flanks by a spring. A threaded rod, to the bottom end of which a pipe attachment bracket is attached, can be screwed into the bush of the retaining body. The bush can move up and down to a limited extent inside the retaining body and, in the raised position, has the freedom to be rotated in order to allow the threaded rod to be adjusted without the entire threaded rod with pipe attachment bracket having to be rotated.

A drawback of this known system is that tightening and adjusting the threaded rod with pipe attachment bracket in the coupling element takes up a large amount of time. In particular during mounting on a ceiling, these operations have to be carried out above the head of a fitter, with the result that the arms may quickly become tired. In this known system, accurate adjustment of the object to be suspended is difficult in particular if the weight of the object is considerable or if a plurality of coupling elements are required in order to suspend the object. In such cases, auxiliary tools or additional people will soon be required in order to temporarily support the object. If, for applications involving a plurality of coupling elements, for example when hanging pipes, the ceiling or wall furthermore is not flat, then adjusting and adapting the plurality of suspension points to one another is a tiring and time-consuming process.

The object of the present invention is to overcome the abovementioned drawbacks, and in particular to provide an inexpensive, user-friendly rail attachment system with which objects can be attached to a mounting rail in a desired position quickly, easily and without the need for excessive force. More particularly, the object of the invention is to provide a rail attachment system with which objects can be accurately attached, via a plurality of coupling elements, to a mounting rail on a ceiling or wall which may or may not be flat and, if desired, can be readjusted.

According to the invention, this object is achieved by means of a rail attachment system according to claim 1. The system comprises a mounting rail which is substantially C-shaped in cross section and has a continuous slot which is delimited by two guide flanks. A mounting head of a coupling element can slide to and fro inside the mounting rail. The mounting head is adjoined by two or more shell parts, which together delimit a cavity. The shape of the cavity is such that a rod-like part of an object to be attached can be fitted into it. A locking member adjoins the shell parts in such a manner that it can move between a locked position and a free position. In the free position of the locking member, the rod-like part can be fitted between the shell parts. In the locked position, the shell parts are pressed together by the locking member and an inserted rod-like part is retained between them. The locking member can be actuated easily, with little effort and rapidly. The system according to the invention makes it possible to gain considerable amounts of time when hanging objects. The locking operation carried out after insertion does not interfere with the position of the coupling element in the mounting rail and can be carried out with one hand. If the object is to be suspended from a ceiling, the locking member, which can be operated quickly and easily, has the additional advantage that the arm muscles of the fitter do not experience any fatigue. If a large object has to be suspended from a plurality of coupling elements, the plurality of rod-like parts may advantageously be fitted simultaneously into the associated coupling elements and then adjusted to the desired height and locked one by one. During this adjustment, the rod-like parts which have not yet been locked are free to move up and down. This makes the system particularly suitable for hanging elongate objects, such as pipes, from ceilings.

On the side of the mounting head, the locking member is advantageously provided with a cam profile. In the free position, the cam profile provides the mounting head with sufficient freedom to be displaced into a desired position in the mounting rail without excessive resistance. In the locked position, the locking member exerts a force, via a cam of the cam profile, which is such that the head part is pulled towards the guide flanks and the coupling element is locked on the mounting rail. Therefore, this advantageous embodiment provides a rail attachment system in which a movement of the locking member from a free position to a locked position at the same time locks a coupling element in a defined, desired position on a mounting rail and, in addition, securely clamps a rod-like part of an object to be attached in the coupling element. This saves time and, moreover, reduces the costs of the structure, since only one locking member has to be provided.

Further preferred embodiments of the invention are defined in claims 3-10.

One embodiment of the invention will be explained in more detail with reference to the appended drawing, in which:
Fig. 1 shows a perspective view of a rail attachment system according to the invention;
Fig. 2 shows a view corresponding to Fig. 1, presenting an exploded view of the components;
Fig. 3 shows a cross-sectional view of Fig. 1;
Fig. 4 shows a view corresponding to Fig. 3, with the threaded rod inserted;
Fig. 5 shows a side view and bottom view of the system from Fig. 1, with the locking member in the free position;
Fig. 6 shows a view corresponding to Fig. 5, with the locking member in the locked position;
Fig. 7 shows a front view and bottom view of a variant embodiment, with the locking member in the free position;
Fig. 8 shows a view corresponding to Fig. 7, with the locking member in the locked position;
Figs 9a-g illustrate, in steps, the way in which a rail attachment system is fitted and adjusted with a pipe which is to be suspended from it.

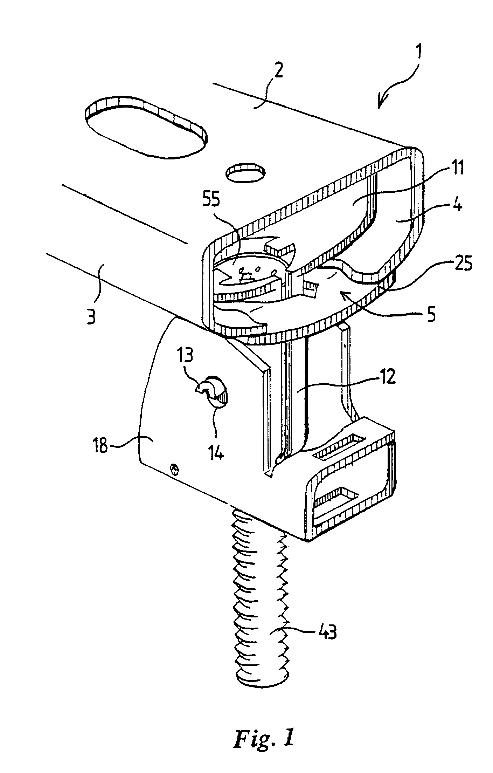

The rail attachment system shown in Figs 1-6 comprising a mounting rail 1 with a flat base 2, two side walls 3 and two inwardly projecting guide flanks 4. The guide flanks 4 delimit a continuous slot 5. The mounting rail is intended to be attached to a wall or a ceiling to hang objects from it, for example pipes of pipe networks, an air-conditioning unit, etc.

The rail attachment system furthermore comprises a coupling element 10 with a mounting head 11 and a retaining body 12. The mounting head 11 can be displaced freely to and fro inside the mounting rail 1, with the retaining body 12 projecting outwards through the continuous slot 5. The retaining body 12 is provided with two pivot pins 13, about which a locking member 18 with two pivot eyelets 14 can pivot. The locking member 18 is provided with a cam profile 19 with a cam part 20 which lies at a maximum distance from the two pivot eyelets 14.

A clamping plate 25 can be pushed around the retaining body 12 and for this purpose is provided with a central recess 26 with two notches 27 for the pivot pins 13 of the retaining body 12 to pass through.

In the assembled state, the clamping plate 25 is pushed to just under the mounting head 11, and the pivot eyelets 14 of the locking member 18 are positioned around the pivot pins 13. The clamping plate 25 comes to rest on the cam profile 19, space being left clear between the top side of the clamping plate 25 and the underside of the mounting head 11 for the guide flanks 4 of the mounting rail 1. The mounting head 11 of the coupling element 10 can be displaced inside the mounting rail 1, the clamping plate 25 being situated on the outside of the mounting rail 1.

The mounting head 11 is advantageously designed to be sufficiently narrow for it to be possible to fit this head in through the passage slot 5 in a transverse orientation before rotating it through 90°, after which its underside comes to rest on the guide flanks 4. It is thus possible to fit additional coupling elements without them having to be pushed inwards from an open end of a mounting rail 1.

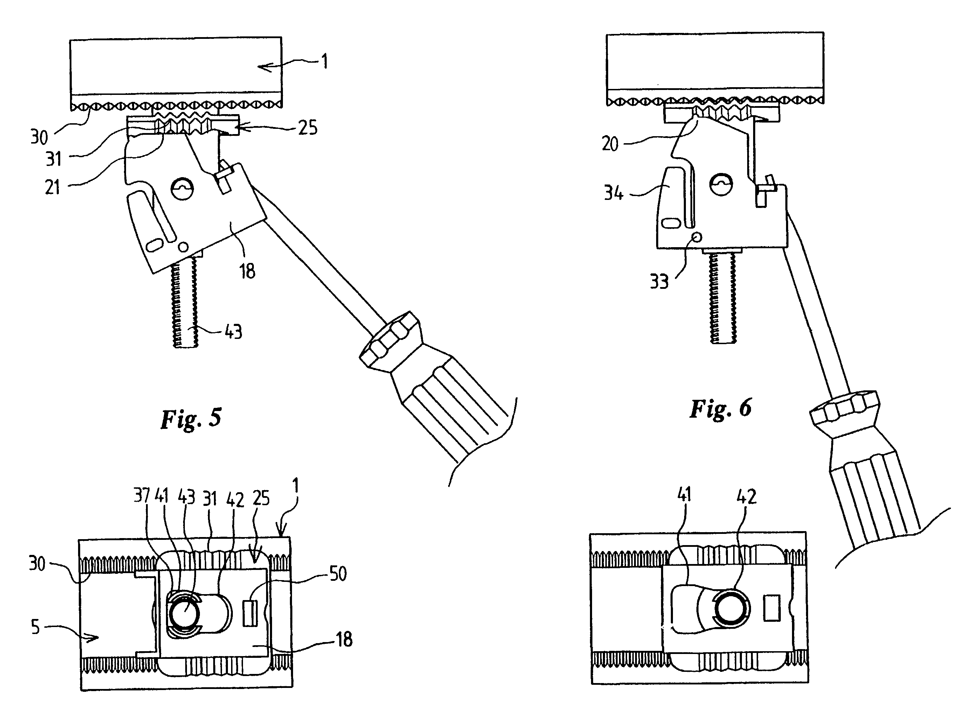

In the assembled state, the locking member 18 can pivot between a free position (Fig. 5) and a locked position (Fig. 6). In the locked position, the cam part 20 of the cam profile 19 bears against the clamping plate 25 in such a manner that it is pressed forcibly towards the mounting head 11. As a result, the mounting head 11 is pulled towards the guide flanks 4, resulting in the guide flanks 4 being held securely between the clamping plate 25 and the mounting head 11. In the free position, the clamping plate 25 bears against a part 21 of the cam profile 19 which projects less far. As a result, there is sufficient play between the clamping plate 25 and the mounting head 11 for the entire coupling element 10 to be displaced into a desired position in the mounting rail 1.

Advantageously, the guide flanks 4 and the clamping plate 25 are provided with complementary corrugated or toothed structures 30 and 31, respectively, which engage in one another in the locked position. This form fit makes it possible to reduce the force which the cam part 20 of the cam profile 19 has to exert. As a result, the actuating force which is required to rotate the locking member 18 from the free position into the locked position is correspondingly reduced. In a variant which is not shown, the underside of the mounting head is provided with a profiled structure. The cam part 20 is designed with a locking cam 32. In the locked position, the locking cam 32 engages in the corrugated or toothed structure 31 of the clamping plate 25. The locking cam 32 forms additional resistance if the locking member 18 has to be rotated back from the locked position into the free position. More definitive locking of the locking member 18 in the locked position can be achieved by fitting a split pin into recesses 33 in the locking member 18 or bending a side wall part 34 of the locking member 18 downwards (see Fig. 6).

The coupling element 10 can not only be slid to and fro in the longitudinal direction of the mounting rail 1, but also can to some extent rock back and forth in the transverse direction. This is achieved as a result of the mounting head 11 fitting into the mounting rail 1 with play and, moreover, by designing the underside of the mounting head 11 and the top side of the guide flanks 4 with a radius. The rocking movement is possible in both the free position and the locked position, and in the locked position, the complementary corrugated or toothed structures 30, 31 engage in one another with a play which is such that only displacement in the longitudinal direction of the mounting rail 1 is blocked.

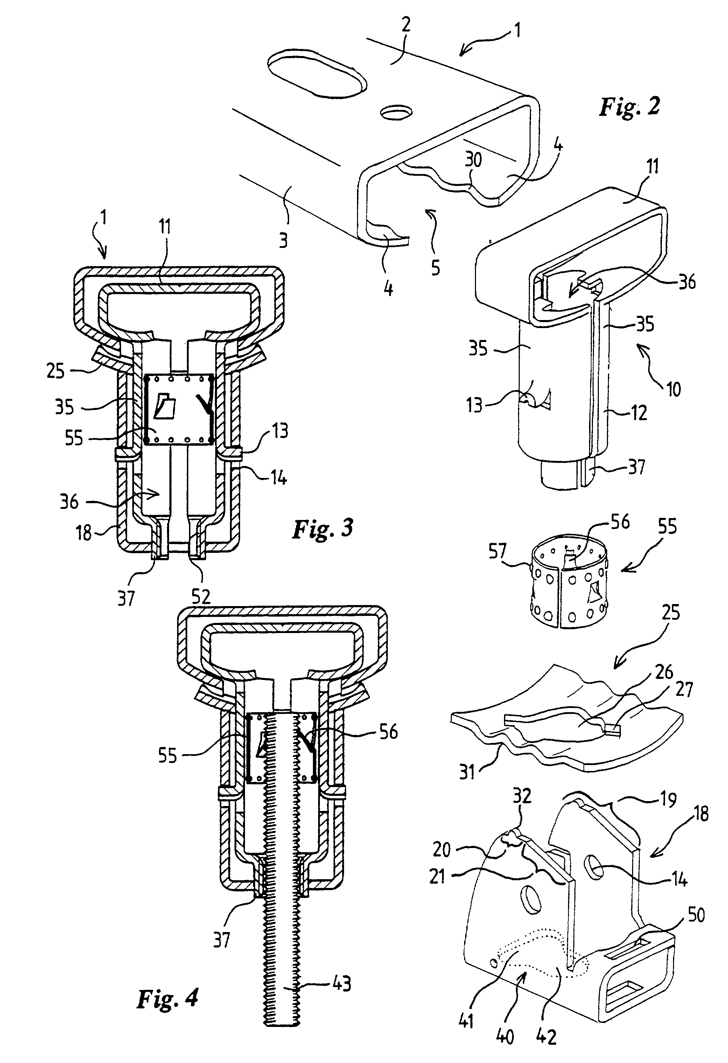

As can be seen in Fig. 2, the retaining body 12 is of cylindrical design, with two shell parts 35 which are separated from one another by longitudinal slots and together delimit a cavity 36. The two shell parts 35 are connected at one end to the mounting head 11 and at their free end open out into a narrowed part 37. The cavity 36 is correspondingly reduced at the location of the narrowed parts 37. In the assembled state, the narrowed parts 37 are delimited by the edges of a keyhole-shaped cutout 40 in the locking member 18. In the free position (Fig. 5) of the locking member 18, the narrowed parts 37 are delimited by a wide part 41 of the cutout 40. In the locked position (Fig. 6), the narrowed parts 37 are delimited by a reduced part 42 of the cutout 40. The reduced part 42 is in this case sufficiently small for a rotation of the locking member 18 into the locked position to press the narrowed parts 37 together. If a rod-like part 43 of an object to be suspended is situated inside the cavity 36, this part will be clamped securely between the narrowed parts 37 as a result of them being pressed together. Consequently, it is advantageously possible to clamp the rod-like part 43 securely inside the coupling element 10 by means of a simple actuating operation.

If desired, unlocking can be effected by rotating the locking member 18 from the locked position into the free position.

To facilitate actuation of the locking member 18, the latter is provided with two insertion slots 50 into which a lever, for example a screwdriver, can be fitted. As a result of a transverse force being exerted on the screwdriver, the locking member 18 can easily be rotated from one position into the other. In this case, the lever reduces the distance between the fitter and the rail attachment system, which is advantageous in particular for use on a ceiling.

The rod-like part 43 of an object to be suspended is in this case formed by a threaded rod, in which case the shell parts 35 may be provided with an internal screwthread. In the embodiment shown, the internal screwthread 52 is provided in the narrowed parts 37. The internal screwthread 52 engages on the external screwthread of the threaded rod fitted between the shell parts 35 only in the locked position. This has the advantage that, in the free position, the threaded rod can be pushed freely inwards into the retaining body 12 just as far as desired. Then, in the locked position, fine positioning of the threaded rod can be carried out by turning the latter with respect to the internal screwthread 52, resulting in a height adjustment of the object to be suspended with respect to the mounting rail 1.

Advantageously, a clamping bush 55 is provided between the shell parts 35. The purpose of the clamping bush 55 is to releasably retain the rod-like part 43 in the free position of the locking member 18 after it has been fitted inwards into the cavity 36. The clamping bush 55 is in this case formed by a split cylindrical element which is provided with three inwardly projecting resilient lips 56. The resilient lips 56 are suitable in particular for retaining a threaded rod, in which case the ends of the lips latch into the external screwthread. In this way, it is advantageously possible to fit the rod-like part 43 into the cavity 36 in the free position without it immediately falling out again. The clamping bush 55 is delimited by the narrowed parts 37 and cannot fall out of the retaining body 12. The temporary clamping of the rod-like part allows the locking member 18 to be actuated with one hand, and it is even possible for a fitter to go and carry out other work before carrying out the locking operation.

In particular, the clamping bush 55 is designed to be sufficiently small for it to be able to slide up and down between the shell parts 35 in the free position. In this way, desired rough vertical adjustment of the inserted rod-like part 43 can be achieved rapidly. To facilitate displacement, the clamping bush 55 is provided on its outer circumference with friction-reducing protuberances 57. These protuberances 57 reduce the contact area and therefore the friction. Moreover, the protuberances 57 prevent the clamping bush 55 from becoming jammed inside the cavity, for example as a result of becoming tilted.

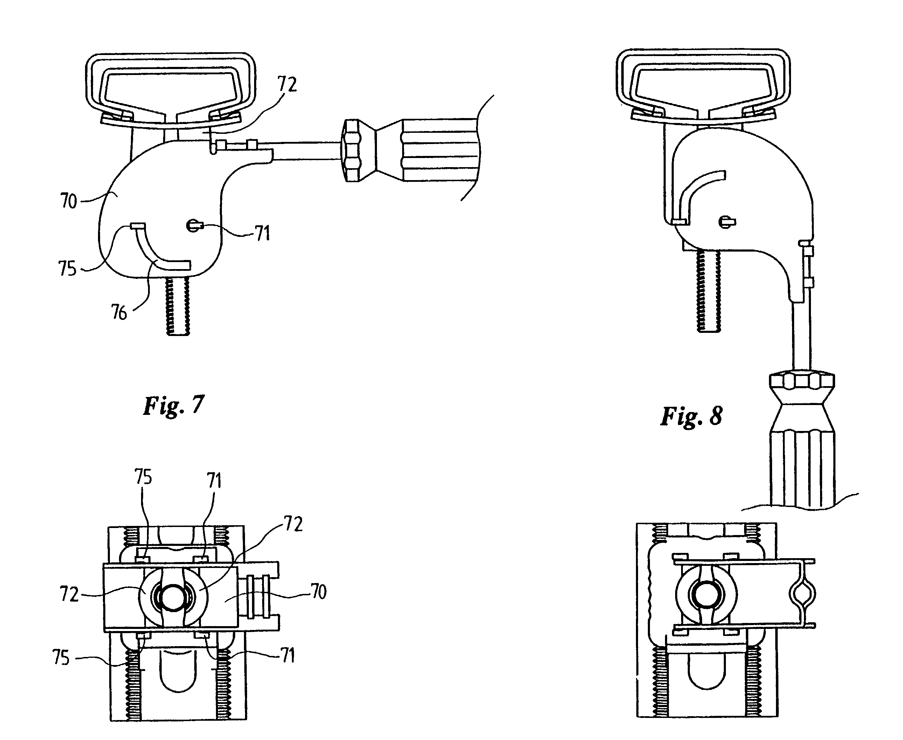

Figs 7 and 8 show a variant design in which a locking member 70 is connected to a shell part 72 of a coupling element in such a manner that it can pivot about a pivot projection 71. Another shell part 72 of the coupling element is provided with a guide projection 75 which is guided in a curved slot 76 of decreasing radius, which is provided in the locking member 70. The decreasing radius of the slot 76 ensures that if the locking member 70 is rotated from the free position (Fig. 7) into the locked position (Fig. 8), the guide projection 75 is forced towards the pivot projection 71, and thus the shell parts 72 are pressed together. In this variant, the direction in which an actuating lever is inserted is perpendicular to the longitudinal direction of the mounting rail, which is desirable for some applications, if there is insufficient space for the actuating lever in the longitudinal direction of the mounting rail.

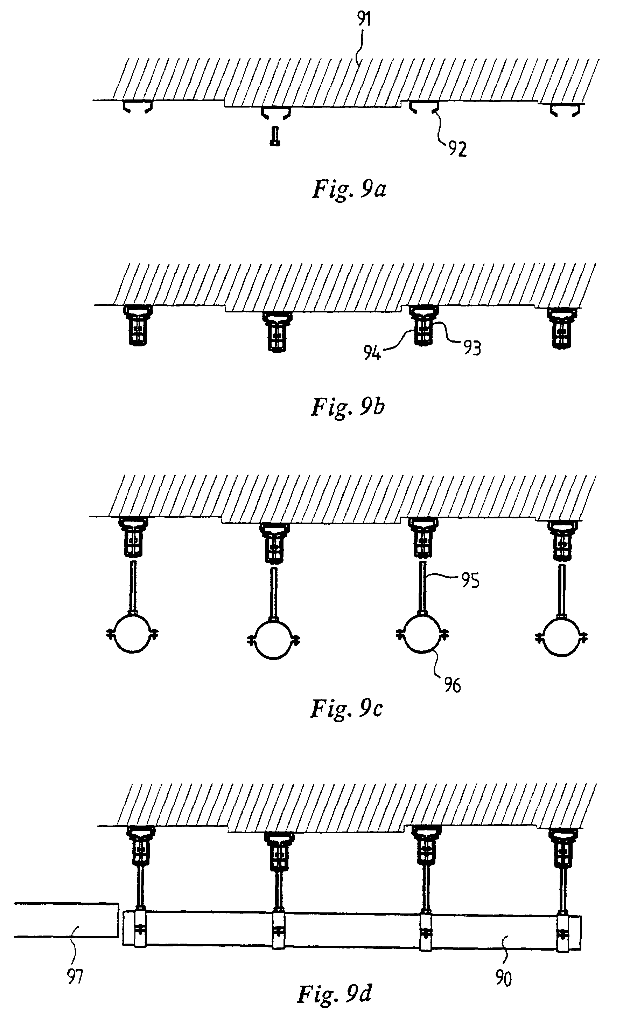

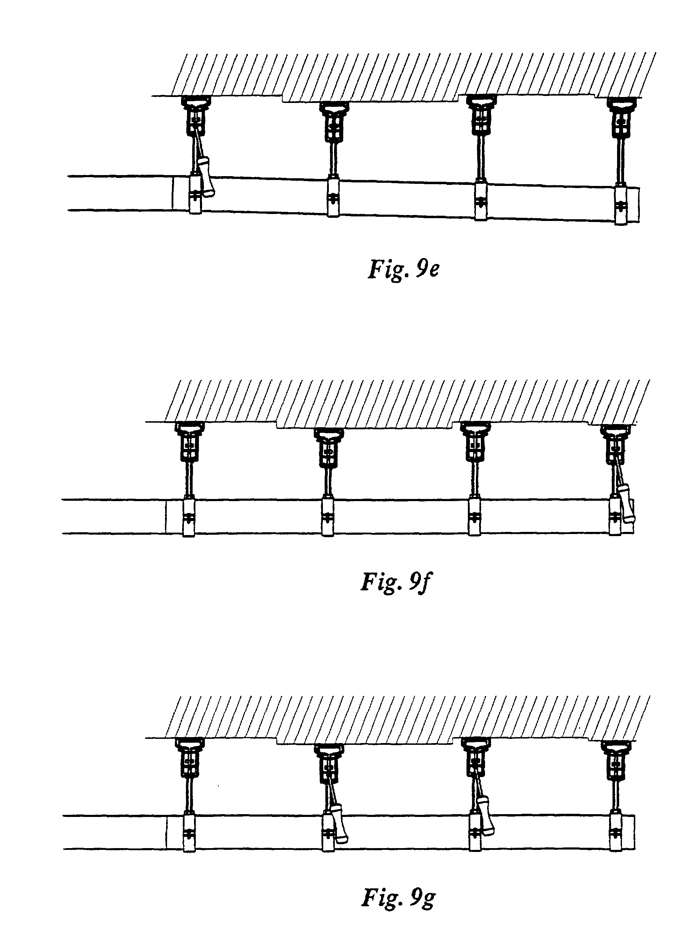

A method for suspending a pipe 90 from a ceiling 91 with the aid of a rail attachment system according to the invention will be explained below with reference to Fig. 9. Fig. 9a shows a ceiling 91 which is not completely flat. Mounting rails 92 are attached to the ceiling. Then, coupling elements 93 with locking members 94 and clamping bushes are fitted in the mounting rails 92 (Fig. 9b). In a subsequent step, threaded rods 95, the ends of which are provided with pipe attachment brackets 96, are fitted into the coupling elements 93 (Fig. 9c). In the process, the threaded rods 95 are clamped securely by the clamping bushes. Then, a pipe 90 is suspended in the pipe attachment brackets 96, which pipe is to be connected on the left-hand side to a pipe 97 which has already been hung (Fig. 9d). The clamping of the threaded rods 95 provided by the clamping bushes in this case is sufficiently strong to also support the weight of the pipe 90. The left-hand end of the pipe 90 is accurately adjusted and connected to the pipe 97, after which the locking member 94 of the coupling element 93 situated on the far left is moved into the locked position (Fig. 9e). The pipe 90 is then accurately adjusted with respect to the locked left-hand part, for example into a horizontal position, and the locking member 94 of the coupling element 93 situated furthest to the right is moved into the locked position (Fig. 9f). The threaded rods 95 and the pipe attachment brackets 96 attached to them which are situated in the centre are advantageously free to move up and down in their coupling elements 93, together with the associated clamping bushes, during the adjustment operation. In a final step, the locking members 94 of the coupling elements situated in the centre can be rotated into the locked position (Fig. 9g). During hanging and adjustment of the pipe 90, it has also proven advantageous for the coupling elements 93 which have not yet been locked to be free to slide to and fro inside the mounting rails 92. After the pipe 90 has been adjusted and the coupling elements 93 locked, it has proven advantageous for the coupling elements 93 to be able to rock to a certain extent inside the mounting rail. In this way, changes in the length of the pipe 90, for example as a result of temperature changes, can easily be absorbed.

Therefore, the invention provides a very user-friendly rail attachment system with which, after rough positioning of a coupling element with respect to a mounting rail and/or of a rod-like part with respect to the coupling element, which is easy and quick to carry out, the various components can be locked with respect to one another. The locking preferably comprises one actuating operation which can be carried out very easily and quickly and simply consists of rotating a locking member from a free position into a locked position, it being possible to utilize a conventional tool and a favourable lever action.

In addition to the embodiment shown, numerous variants are possible within the scope of the hereinafter appended claims. For example, it is possible for the retaining body to be designed in three or more separate shell parts. In another variant, the clamping plate is omitted. In this case, the cam profile of the locking member engages directly on the guide flanks of the mounting rail. In this case, it is even possible for the cam part of the cam profile to be designed with a profiled structure which is complementary to a profiled structure of the guide flanks. The cavity may adopt numerous shapes which are matched to the shapes of retaining parts to be retained. The coupling element may also be locked in a desired position in a mounting rail by means of a separate locking member.

## Claims

1. Rail attachment system, comprising:
- a mounting rail (1) which is substantially C-shaped in cross section and has two guide flanks (4) which delimit a continuous slot (5);
- at least one coupling element (10) with a mounting head (11) which is displaceable inside the mounting rail (1) and is lockable, and a retaining body (12) which is connected to the mounting head (11) and has retaining means for retaining a rod-like part (43) of an object which is to be attached to the coupling element (10);
**characterized in that**
the retaining means comprise a locking member (18) which is connected to the retaining body (12) in such a manner that it moves during a locking operation between a free position and a locked position; and
the retaining body (12) is designed as two or more separate shell parts (35), which together delimit a cavity (36) into which the rod-like part (43) can be fitted in the free position of the locking member (18);
the locking member (18) delimiting the shell parts (35) in the locked position in such a manner that these parts are pressed towards one another and can hold the inserted rod-like part (43) securely.

2. Rail attachment system according to claim 1, in which the locking member (18) is provided, on the side of the mounting head (11), with a cam profile (19), and the locking member (18), in the locked position, exerting a force, via a cam (20) of the cam profile (19), which pulls the mounting head (11) towards the guide flanks (4) and locks the coupling element (10) on the mounting rail (1).

3. Rail attachment system according to claim 1 or 2, in which the locking member (18) is provided with a slot (40) with a reduced section (42) and a wide section (41), the reduced section (42) of which slot delimits the shell parts (35) in the locked position and the wide section (41) of which slot delimits the shell parts (35) in the free position.

4. Rail attachment system according to one of claims 1-3, in which the rod-like part (43) is a threaded rod, and at least some of the shell parts (35) are provided with an internal screwthread (52).

5. Rail attachment system according to one of the preceding claims, in which a clamping bush (55) is provided in the cavity (36) between the shell parts (35), for the purpose of releasably retaining the rod-like part in the free position of the locking member (18), after insertion.

6. Rail attachment system according to claim 5, in which the clamping bush (55) can slide between the shell parts (35) in the free position.

7. Attachment system according to claim 6, in which the clamping bush (55) is provided on its outer circumference with friction-reducing protuberances (57).

8. Rail attachment system according to one of claims 2-7, in which a clamping plate (25) is provided, which extends displaceably around the retaining body (12) and, in an assembled state, is positioned between the guide flanks (4) of the mounting rail (1) and the cam profile (19) of the locking member (18).

9. Rail attachment system according to claim 8, in which the guide flank (4) and the clamping plate (25) and/or the mounting head (11) are provided with profiled structures (30, 31) which engage in one another.

10. Rail attachment system according to one of claims 7-9, in which the mounting head (11) fits with play into the mounting rail (1) and, on the side of the retaining body (12), is provided with rounded surfaces, and in which the guide flanks (4) are provided with complementary rounded surfaces.

## Patentansprüche

1. Schienenanbringungssystem, das umfasst:
eine Montageschiene (1), die im Querschnitt im Wesentlichen C-förmig ist und zwei Führungsflanken (4) aufweist, die einen durchgehenden Schlitz (5) begrenzen;
wenigstens ein Kupplungselement (10) mit einem Montagekopf (11), der im Inneren der Montageschiene (1) verschoben werden kann und arretiert werden kann, sowie einem Haltekörper (12), der mit dem Montagekopf (11) verbunden ist und eine Halteeinrichtung zum Halten eines stangenartigen Teils (43) eines an dem Kupplungselement (10) anzubringenden Objektes aufweist;
**dadurch gekennzeichnet, dass**
die Halteeinrichtung ein Arretierelement (18) umfasst, das mit dem Haltekörper (12) so verbunden ist, dass es sich zwischen einer freien Position und einer arretierten Position bewegt während einer Arretierung, und
der Haltekörper (12) als zwei oder mehr separate Schalenteile (35) ausgeführt ist, die zusammen einen Hohlraum (36) eingrenzen, in den das stangenartige Teil (43) in der freien Position des Arretierelementes (18) eingepasst werden kann;
wobei das Arretierelement (18) die Schalenteile (35) in der arretierten Position so eingrenzt, dass diese Teile aufeinander zu gedrückt werden und das eingeführte stangenartige Teil (43) sicher halten können.

2. Schienenanbringungssystem nach Anspruch 1, wobei das Arretierelement (18) auf der Seite des Montagekopfes (11) mit einem Nockenprofil (19) versehen ist und das Arretierelement (18) in der arretierten Position über einen Nocken (20) des Nockenprofils (19) eine Kraft ausübt, durch die der Montagekopf (11) auf die Führungsflanken (4) zu gezogen wird und das Kupplungselement (10) an der Montageschiene (1) arretiert.

3. Schienenanbringungssystem nach Anspruch 1 oder 2, wobei das Arretierelement (18) mit einem Schlitz (40) mit einem verengten Abschnitt (42) und einem breiten Abschnitt (41) versehen ist, wobei der verengte Abschnitt (42) des Schlitzes die Schalenteile (35) in der arretierten Position eingrenzt und der breite Abschnitt (41) des Schlitzes die Schalenteile (35) in der freien Position eingrenzt.

4. Schienenanbringungssystem nach einem der Ansprüche 1 - 3, wobei das stangenartige Teil (43) eine Gewindestange ist und wenigstens einige der Schalenteile (35) mit einem Innen-Schraubgewinde (52) versehen sind.

5. Schienenanbringungssystem nach einem der vorangehenden Ansprüche, wobei eine Klemmbuchse (55) in dem Hohlraum (36) zwischen den Schalenteilen (35) vorhanden ist, um das stangenartige Teil nach dem Einführen lösbar in der freien Position des Arretierelementes (18) zu halten.

6. Schienenanbringungssystem nach Anspruch 5, wobei die Klemmbuchse (55) in der freien Position zwischen den Schalenteilen (35) gleiten kann.

7. Anbringungssystem nach Anspruch 6, wobei die Klemmbuchse (55) an ihrem Außenumfang mit reibungsverringernden Höckern (57) versehen ist.

8. Schienenanbringungssystem nach einem der Ansprüche 2 - 7, wobei eine Klemmplatte (25) vorhanden ist, die sich verschiebbar um den Haltekörper (12) herum erstreckt und in einem zusammengebauten Zustand zwischen den Führungsflanken (4) der Montageschiene (1) und dem Nockenprofil (19) des Arretierelementes (18) angeordnet ist.

9. Schienenanbringungssystem nach Anspruch 8, wobei die Führungsflanke (4) und die Klemmplatte (25) und/oder der Montagekopf (11) mit Profil-Strukturen (30, 31) versehen sind, die ineinander greifen.

10. Schienenanbringungssystem nach einem der Ansprüche 7 - 9, wobei der Montagekopf (11) mit Spiel in die Montageschiene (1) passt und auf der Seite des Haltekörpers (12) mit abgerundeten Flächen versehen ist, und wobei die Führungsflanken (4) mit komplementären abgerundeten Flächen versehen sind.

## Revendications

1. Système d'attachement de rail, comprenant :
-- un rail de montage (1) dont la section transversale est sensiblement en forme de C et comporte deux flancs de guidage (4) qui délimitent une fente continue (5) ;
-- au moins un élément de couplage (10) avec une tête de montage (11) qui est déplaçable à l'intérieur du rail de montage (1) et qui est susceptible d'être bloquée, et un corps de retenue (12) qui est connecté à la tête de montage (11) et qui a des moyens de retenue pour retenir une partie en forme de barre (43) d'un objet qui doit être attaché à l'élément de couplage (10) ;
**caractérisé en ce que**
les moyens de retenue comprennent un élément de blocage (18) qui est connecté au corps de retenue (12) d'une manière telle qu'il se déplace, en action, entre une position libre et une position bloquée ; et
le corps de retenue (12) est conçu sous la forme de deux ou plusieurs parties en coque (35) séparées, qui délimitent ensemble une cavité (36) dans laquelle peut être logée la partie en forme de barre (43) dans la position libre de l'élément de blocage (18) ;
l'élément de blocage (18) délimite les parties en coque (35) dans la position bloquée d'une manière telle que ces parties sont pressées les unes vers les autres et peuvent maintenir assurément la partie en forme de barre (43) insérée.

2. Système d'attachement de rail selon la revendication 1, dans lequel l'élément de blocage (18) est pourvu, sur le côté de la tête de montage (11), d'un profil de came (19), et l'élément de blocage (18) exerçant, dans la position bloquée, une force via une came (20) du profil de came (19) qui tire la tête de montage (11) vers les flancs de guidage (4) et qui bloque l'élément de couplage (10) sur le rail de montage (1).

3. Système d'attachement de rail selon l'une ou l'autre des revendications 1 et 2, dans lequel l'élément de blocage (18) est pourvu d'une fente (40) avec une section réduite (42) et une section large (41), la section réduite (42) de ladite fente délimitant les parties en coque (35) dans la position bloquée, et la section large (41) de ladite fente délimitant les parties en coque (35) dans la position libre.

4. Système d'attachement de rail selon l'une des revendications 1 à 3, dans lequel la partie en forme de barre (43) est une barre filetée, et certaines des parties en coque (35) au moins sont pourvues d'un taraudage intérieur (52).

5. Système d'attachement de rail selon l'une des revendications précédentes, dans lequel une douille de serrage (55) est prévue dans la cavité (36) entre les parties en coque (35), dans le but de retenir de façon libérable la partie en forme de barre dans la position libre de l'élément de blocage (18), après insertion.

6. Système d'attachement de rail selon la revendication 5, dans lequel la douille de serrage (55) est capable de coulisser entre les parties en coque (35) dans la position libre.

7. Système d'attachement de rail selon la revendication 6, dans lequel la douille de serrage (55) est dotée sur sa circonférence de protubérances de réduction de friction (57).

8. Système d'attachement de rail selon l'une des revendications de 1 7, dans lequel est prévue une plaque de serrage (25) qui s'étend de façon déplaçable autour du corps de retenue (12) et qui est positionnée, dans un état assemblé, entre les flancs de guidage (4) du rail de montage (1) et le profil de came (19) de l'élément de blocage (18).

9. Système d'attachement de rail selon la revendication 8, dans lequel le flanc de guidage (4) et la plaque de serrage (25) et/ou la tête de montage (11) sont pourvus de structures profilées (30, 31) qui s'engagent les unes dans les autres.

10. Système d'attachement de rail selon l'une des revendications 7 à 9, dans lequel la tête de montage (11) se loge avec jeu dans le rail de montage (1) et, sur le côté du corps de retenue (12), elle est pourvue de surfaces arrondies, et dans lequel les flancs de guidage (4) sont pourvus de surfaces arrondies complémentaires.
